# EUROPEAN PATENT APPLICATION

(11) **EP 3 726 351 A1**
(43) Date of publication of application: **21.10.2020**
(21) Application number: 20168749.8
(22) Date of filing: 08.04.2020
(51) Int. Cl.: G06F 3/041, B60K 35/00, G06F 3/0488

(54) **VEHICLE OPERATION INPUT APPARATUS, VEHICLE OPERATION INPUT METHOD AND COMPUTER PROGRAM PRODUCT**

(30) Priority: 19.04.2019 JP 2019080166
(71) Applicant: MAZDA MOTOR CORPORATION, Fuchu-cho, Aki-gun Hiroshima 730-8670 (JP)
(72) Inventor: YAMASHITA, Takayoshi, Fuchu-cho, Aki-gun, Hiroshima 730-8670 (JP); KATO, Shinobu, Fuchu-cho, Aki-gun, Hiroshima 730-8670 (JP); KATO, Yuri, Fuchu-cho, Aki-gun, Hiroshima 730-8670 (JP); MATSUO, Juntaro, Fuchu-cho, Aki-gun, Hiroshima 730-8670 (JP); FUJIMURA, Eri, Fuchu-cho, Aki-gun, Hiroshima 730-8670 (JP); MOROKAWA, Hado, Fuchu-cho, Aki-gun, Hiroshima 730-8670 (JP)
(74) Representative: Müller-Boré & Partner Patentanwälte PartG mbB

(57) **Abstract**

The present disclosure provides a vehicle operation input apparatus D that performs an input on a vehicle-mounted device that achieves a predetermined function at a plurality of levels. The vehicle operation input apparatus D includes a display unit 1, an input position detection unit 2 that has an operation surface associated with a first position on a display surface of the display unit 1 and detects a second position on the operation surface in which an input operation has been performed, a display control unit 32 that controls the display unit 1, and an input content obtaining unit 33 that obtains, as input content, display content displayed in the first position corresponding to the second position detected by the input position detection unit 2, in which the display control unit 32 indicates level setting display representing a setting of the levels and the input content obtaining unit 33 determines a change amount based on the number of second positions detected by the input position detection unit 2 in the level setting display when an input operation is performed on the level setting display, and obtains, as the input content, the setting of the levels to be changed by the change amount.

## Description

### TECHNICAL FIELD

The present disclosure relates to a vehicle operation input apparatus and a vehicle operation input method for inputting input content to a device (which may include hardware and software) installed in a vehicle.

### BACKGROUND ART

Various devices (e.g., including hardware and software) having predetermined functions can be installed in vehicles such as, for example, automobiles and railroad vehicles. Such a vehicle has a vehicle operation input apparatus that receives, from a user, input operations such as a selection of a setting target and an input of a setting value to the selected setting target to operate the devices as desired. Such a vehicle operation input apparatus is disclosed in, for example, PTL 1.

The touch type vehicle operation input apparatus disclosed in PTL 1 includes travel state identifying means that identifies whether a vehicle is traveling, touch operation input means that receives a touch continuation operation performed by continuing a touch state with respect to a predetermined touch surface, and control means. When it is identified that the vehicle is not traveling, if the touch continuation operation is performed, the control means successively obtains a predetermined change amount concerning the touch continuation operation while the touch state of the touch continuation operation is continued and a predetermined control parameter is continuously changed based on the change amount obtained successively. In contrast, when it is identified that the vehicle is traveling, the control means makes a predetermined parameter change to the control parameter each time the touch continuation operation is performed.

### [Prior Art Documents]

### [Patent documents]

[Patent document 1] JP-A-2013-97519

### SUMMARY

By the way, since the touch type vehicle operation input apparatus disclosed in PTL 1 continuously changes the control parameter during a stop and makes a predetermined parameter change to the control parameter during traveling, the touch type vehicle operation input apparatus is not easily affected by vibrations during traveling, thereby preventing an input operation from becoming an undesired operation due to vibrations received while the touch is continued. However, since only a predetermined parameter change (e.g., a certain control state change that is uniquely defined) is made to the parameter every touch continuation operation during traveling (see, for example, paragraph [0007] in PTL 1), when the difference between the current value and a desired setting value (e.g., desired value) is large, many touch continuation operations may be required.

The present disclosure addresses the above situations with an object of providing a vehicle operation input apparatus and a vehicle operation input method that can enable an input of a desired setting value with an easier input operation.

Thus, according to an aspect, the problem relates to facilitate input of a desired setting value for a device installed in a vehicle, thereby improving operation of the device. This problem is solved by the features disclosed by the independent claims. Further exemplary embodiments are defined by the dependent claims.

According to an aspect, a vehicle operation input apparatus is provided. The vehicle operation input apparatus is configured to perform an input to a device that is installed in a vehicle and that is configured to achieve a predetermined function at a plurality of mutually different levels. The vehicle operation input apparatus includes a display unit; an input position detection unit that has an operation surface associated with a first position on a display surface of the display unit and is configured to detect a second position on the operation surface, the second position being where an input operation is performed; a display control unit configured to control the display unit; and an input content obtaining unit configured to obtain, as input content, display content displayed in the first position that corresponds to the second position detected by the input position detection unit. The display control unit is configured to display a level setting display representing a setting of the levels in the first position on the display surface. The input content obtaining unit is configured to determine a change amount of the levels based on the number of second positions detected by the input position detection unit in the level setting display in an input operation on the level setting display and to obtain, as the input content, the setting of the levels to be changed by the determined change amount. Particularly in some circumstances, in various aspects and embodiments described herein, the variation amount of the levels may be determined in proportion to the number of second positions (e.g., (the variation amount of the levels) = (the number of second positions) × (the unit change amount)). Particularly in some circumstances, in various aspects and embodiments as described herein, the variation amount of the levels may be determined to be:
a predetermined unit change amount (e.g., (the variation amount of the levels) = (the unit change amount)) when the number of second positions is 1,
twice the unit change amount (e.g., (the variation amount of the levels) = 2 × (the unit change amount)) when the number of second positions is 2; and
a predetermined border value (e.g., the upper limit value in the case of temperature rise or the lower limit value in the case of temperature drop) in the settable range of the levels (e.g., (the variation amount of the levels) = (the border value (e.g., the upper limit value or the lower limit value)) when the number of second positions is 3.

Particularly in some further circumstances, in various aspects and embodiments described herein, the variation amount of the levels may be determined to be:
the predetermined unit change amount (e.g., (the variation amount of the levels) = (the unit change amount)) when the number of second positions is 1;
twice the unit change amount (e.g., (the variation amount of the levels) = 2 × (the unit change amount)) when the number of second positions is 2; and
four times the unit change amount (e.g., (the variation amount of the levels) = 4 × (the unit change amount)) when the number of second positions is 3.

Particularly in some circumstances, in various aspects and embodiments described herein, the device may be an air conditioning apparatus and the levels may be the values of an airflow amount when the airflow amount is the setting target. Particularly in some further circumstances, in various aspects and embodiments described herein, the device may be an air conditioning apparatus and the levels may be the values of a temperature when the temperature is the setting target. Particularly in some further circumstances, in various aspects and embodiments described herein, the device may be an audio apparatus and the levels may be the values of a sound volume when the sound volume is the setting target. Particularly in some further circumstances, in various aspects and embodiments described herein, the device may be an automatic traveling apparatus that travels the local vehicle at a set speed and the levels may be the values of a set speed when the set speed is the setting target. Particularly in some further circumstances, in various aspects and embodiments described herein, the device may be a power window apparatus and the levels may be the values of an opening degree representing the opening degree of a window when the opening degree is the setting target.

The vehicle operation input apparatus described above can determine the change amount of the levels based on the number of second positions detected by the input position detection unit in the level setting display when an input is performed on the level setting display. Accordingly, with the vehicle operation input apparatus, various change amounts of the levels can be preset (in other words, various change amounts of the levels can be specified beforehand) according to the number of second positions. Thus, a desired setting value can be input with an easier input operation, which may lead to improved operation of the device installed in the vehicle.

In some exemplary embodiments, in the vehicle operation input apparatus described above, the level setting display may include a first pictorial figure that represents increase in the levels and a second pictorial figure that represents reduction in the levels.

With the vehicle operation input apparatus described above, stepwise increase in the levels can be input by various change amounts (e.g., many steps) and stepwise reduction in the levels can be input by various change amounts. This may lead to improved operation of the device installed in the vehicle.

In some exemplary embodiments, the vehicle operation input apparatus described above may further include a stop detection unit configured to detect whether the vehicle is stopped, wherein the level setting display may include the first pictorial figure and the second pictorial figure when the stop detection unit has detected that the vehicle is not stopped and the level setting display may include a plurality of third pictorial figures that correspond to the plurality of levels when the stop detection unit has detected that the vehicle is stopped. Particularly in some circumstances, in the vehicle operation input apparatus described above, the plurality of third pictorial figures may be arranged in parallel with each other along one direction so as to make a slide operation easy. Particularly in some further circumstances, the first pictorial figures may be rectangles having longer sides along a cross direction intersecting (for example, orthogonally intersecting) with the one direction.

In the vehicle operation input apparatus described above, when the vehicle is traveling, by indicating the level setting display including the first pictorial figure indicating increase in the levels and the second pictorial figure indicating reduction in the levels, an input operation can be performed with, for example, a simple tap operation and an input operation can be performed without taking special care.
In contrast, in the vehicle operation input apparatus, when the vehicle is stopped, by indicating the level setting display including the plurality of third pictorial figures corresponding to the plurality of levels, an input operation can be performed by, for example, a slide operation and a desired setting value can be input more accurately by continuously changing the levels. Thus, operation of the device can be improved with the vehicle operation input apparatus.

In some exemplary embodiments, in the vehicle operation input apparatus described above, the level setting display may be configured to, when the stop detection unit has detected that the vehicle is stopped, also function as set level display representing a currently set level. Further, the display control unit may further be configured to display, when the stop detection unit has detected that the vehicle is stopped,
in a first display aspect, a third pictorial figure of the plurality of third pictorial figures that corresponds to the currently set level in the display unit, and
in a second display aspect that differs from the first display aspect, at least one third pictorial figure of the plurality of third pictorial figures that does not correspond to the currently set level in the display unit. Further, the display control unit may further be configured to display, when the stop detection unit has detected that the vehicle is not stopped,
a line segment representing a range settable by the plurality of levels,
in a third display aspect, a position in the line segment corresponding to the currently set level in the display unit, and
in a fourth display aspect that differs from the third display aspect, at least one position in the line segment not corresponding to the currently set level in the display unit.

Since the vehicle operation input apparatus described above may indicate the set level display representing the currently set level, a desired setting value can be input more accurately with reference to the set level display. Thus, operation of the device can be improved with the vehicle operation input apparatus.

According to another aspect, a vehicle operation input method for performing an input to a device that is installed in a vehicle and that is configured to achieve a predetermined function at a plurality of mutually different levels. The vehicle operation input method includes a display step of displaying predetermined display content; an input position detection step of detecting a position on a display surface, the position being where an input operation is performed; and an input content obtaining step of obtaining, as input content, display content displayed in the position detected in the input position detection step, the display control step indicating a level setting display representing a setting of the levels, the input content obtaining step determining a change amount of the levels based on the number of positions detected in the input position detection step in the level setting display in an input operation on the level setting display and obtaining, as the input content, the setting of the levels to be changed by the determined change amount.

The vehicle operation input method described above can determine the change amount of the levels based on the number of second positions detected in the input position detection step in the level setting display in an input operation on the level setting display. Accordingly, with the vehicle operation input method, various change amounts of the levels can be preset (in other words, various change amounts of the levels can be specified beforehand) according to the number of second positions. Thus, a desired setting value can be input with an easier input operation, which may lead to improved operation of the device installed in the vehicle.

In some exemplary embodiments, in the method according to the above-stated aspect, the level setting display may include a first pictorial figure that represents increase in the levels and a second pictorial figure that represents reduction in the levels.

Further, in some exemplary embodiments, the method according to the above-stated aspect may further comprise a stop detection step of detecting whether the vehicle is stopped, wherein the level setting display may include the first pictorial figure and the second pictorial figure when the vehicle has not been detected to be stopped and the level setting display includes a plurality of third pictorial figures that correspond to the plurality of levels when the vehicle has been detected to be stopped.

Further, in some exemplary embodiments, in the method according to the above-stated aspect, when the vehicle has been detected to be stopped, the level setting display may also function as the set level display representing a currently set level. Further, the method according to the above-stated aspect may further comprise:
displaying, when the vehicle has been detected to be stopped,
   in a first display aspect, a third pictorial figure of the plurality of third pictorial figures that corresponds to the currently set level, and
   in a second display aspect that differs from the first display aspect, at least one third pictorial figure of the plurality of third pictorial figures that does not correspond to the currently set level, and
displaying, when the vehicle has not been detected to be stopped,
   a line segment representing a range settable by the plurality of levels,
   in a third display aspect, a position in the line segment corresponding to the currently set level, and
   in a fourth display aspect that differs from the third display aspect, at least one position in the line segment not corresponding to the currently set level.

Further, according to yet another aspect, a computer program product is provided. The computer program product comprises computer-readable instructions that, when loaded and run on a computer, cause the computer to perform the method according to any one of the above-stated aspect and various embodiments thereof.

According to any one of the above-stated aspects and various embodiments thereof, an input of a desired setting value can be made with an easier input operation, which may lead to improved operation of a device installed in a vehicle.

### BRIEF DESCRIPTION OF THE DRAWINGS

**Fig. 1A** illustrates exemplary structure of a vehicle operation input apparatus according to an embodiment.
**Fig. 1B** illustrates an exemplary relationship between a first position in a display unit and a second position in an input position detection unit of a display unit.
Fig. 2 illustrates, as an example, the arrangement of the display unit and the input position detection unit in a vehicle interior of the vehicle operation input apparatus illustrated in Fig. 1.
**Fig.** 3 illustrates, as an example, an input screen in the case of a stop displayed in the display unit of the vehicle operation input apparatus illustrated in Fig. 1.
**Fig.** 4 illustrates, as an example, an input screen in the case of traveling displayed in the display unit of the vehicle operation input apparatus illustrated in Fig. 1.
**Fig.** 5 is a flowchart illustrating an exemplary operation of the vehicle operation input apparatus illustrated in Fig. 1.
**Fig.** 6 is a flowchart illustrating exemplary temperature rise processing on the driver seat side (and exemplary temperature rise processing on the passenger seat side) indicated in Fig. 5.
**Fig.** 7 is a flowchart illustrating exemplary temperature drop processing on the driver seat side (and exemplary temperature drop processing on the passenger seat side) indicated in Fig. 5.

### DETAILED DESCRIPTION OF EMBODIMENTS

One or a plurality of embodiments of the present disclosure will be described below with reference to the drawings. However, the scope of the present invention is defined by the claims and is not limited to the disclosed specific embodiments. It should be noted here that components denoted by identical reference numerals in the drawings are identical components and descriptions thereof are omitted as necessary. In this specification, non-subscripted reference numerals are used when components are collectively represented and subscripted numerals are used when individual components are represented.

A vehicle operation input apparatus according to an exemplary embodiment may perform inputs to devices (e.g., including hardware and software) that is installed in, for example, a vehicle such as an automobile or a railroad vehicle and that is configured to achieve predetermined functions at a plurality of mutually different levels. This vehicle operation input apparatus may include a display unit that performs display, an input position detection unit that has an operation surface associated with a first position on a display surface of the display unit and detects a second position on the operation surface in which an input operation has been performed (in other words, the second position may be a position where the input operation is performed), a display control unit that controls the display unit, and an input content obtaining unit that obtains, as input content, display content displayed in the first position that corresponds to the second position detected by the input position detection unit. In addition, the display control unit may indicate a level setting display (e.g., Item) representing the setting of the levels in the display unit, and the input content obtaining unit may determine a change amount of the levels based on the number of second positions detected by the input position detection unit in the level setting display in an input operation on the level setting display and obtain, as the input content, the setting of the levels to be changed by the determined change amount. The vehicle operation input apparatus described above will be described more specifically below.

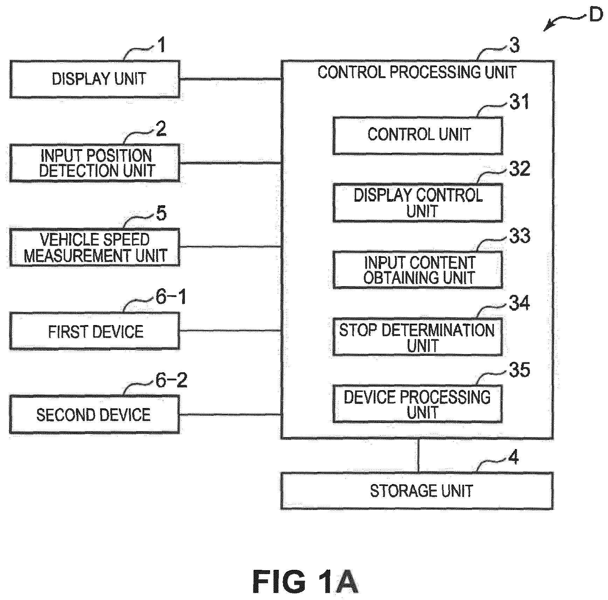

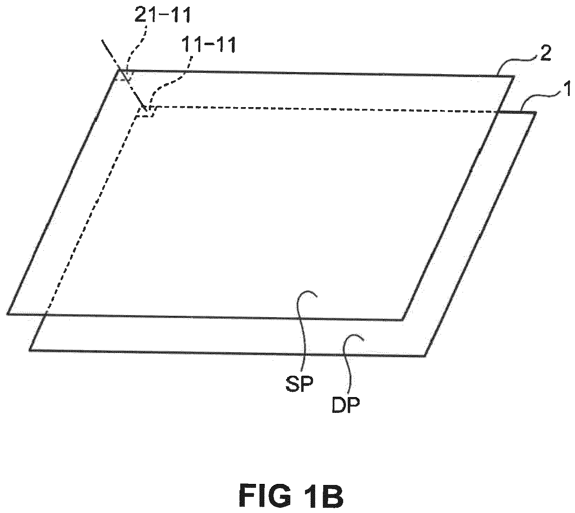

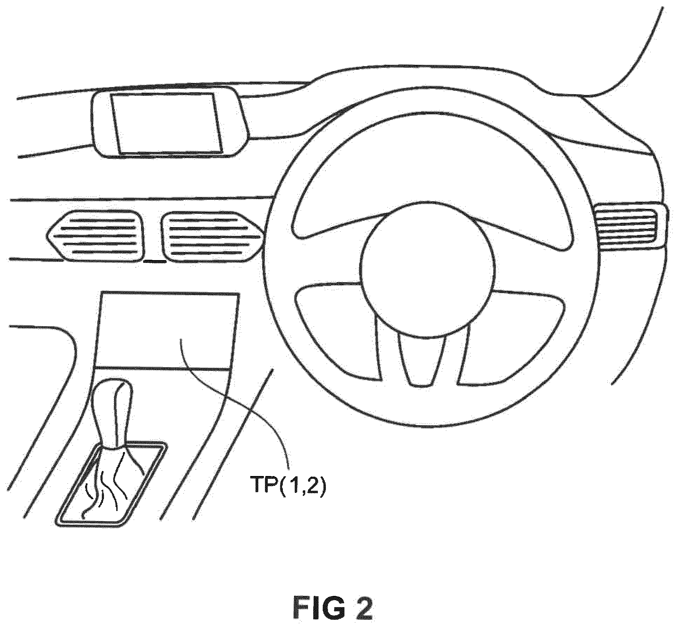

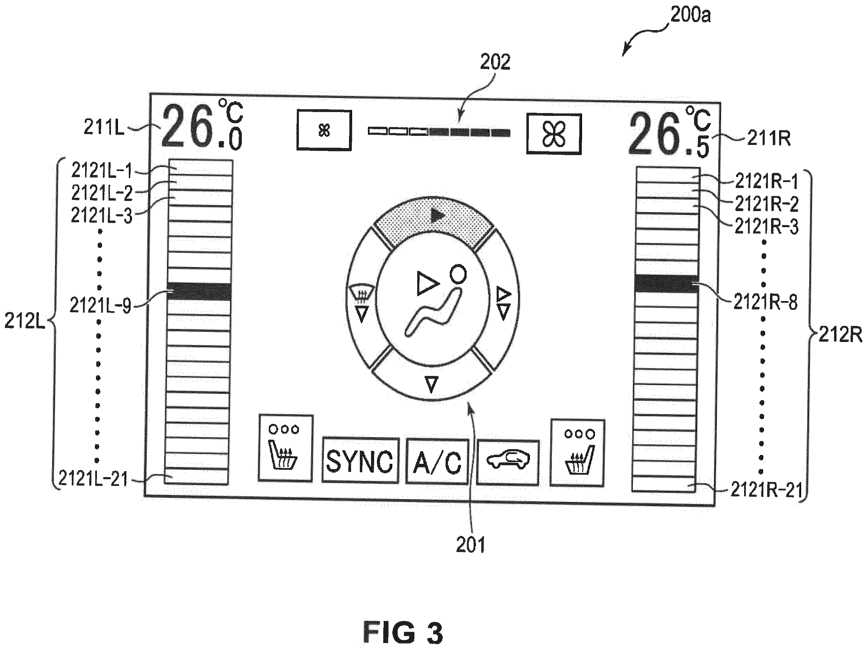

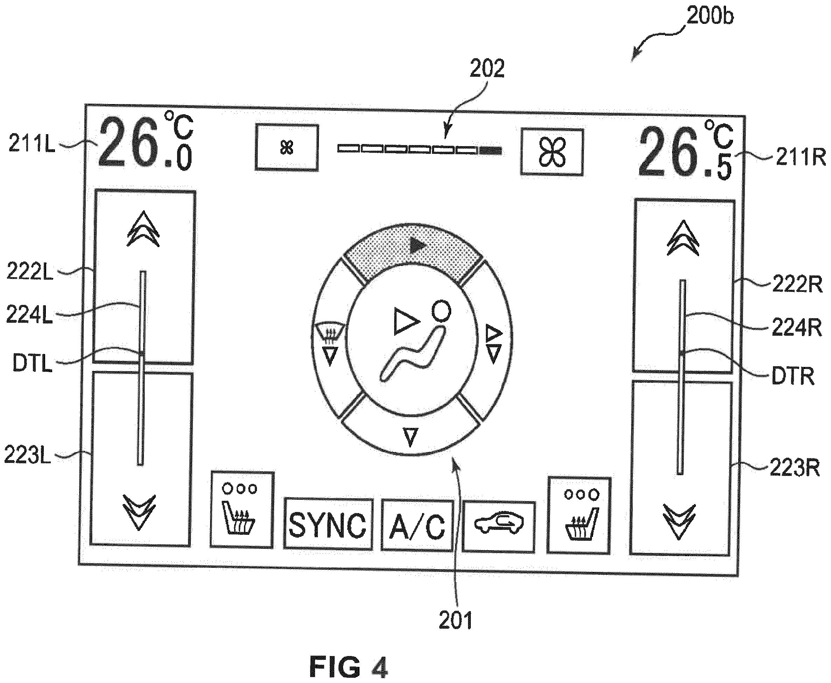

Fig. 1A is a block diagram illustrating exemplary structure of the vehicle operation input apparatus according to the embodiment. Fig. 1B illustrates an exemplary relationship between the first position in the display unit and the second position in the input position detection unit. Fig. 2 illustrates, as an example, the arrangement of the display unit and the input position detection unit in the vehicle interior of the vehicle operation input apparatus illustrated in Fig. 1. Fig. 3 illustrates, as an example, an input screen in the case of a stop displayed in the display unit of the vehicle operation input apparatus illustrated in Fig. 1. Fig. 4 illustrates, as an example, an input screen in the case of traveling displayed in the display unit of the vehicle operation input apparatus illustrated in Fig. 1.

As illustrated in, for example, Fig. 1A, a vehicle operation input apparatus D according to the exemplary embodiment may include a display unit 1, an input position detection unit 2, a control processing unit 3, a storage unit 4, and a vehicle speed measurement unit 5. Further, the vehicle operation input apparatus D may perform inputs to one or a plurality of devices 6 (for instance, first and second devices 6-1 and 6-2 in the example illustrated in Fig. 1A).

The first and second devices 6-1 and 6-2 may be apparatuses (e.g., including hardware and software) that are installed in a vehicle such as, for example, an automobile or a railroad vehicle and may be configured to achieve predetermined functions at a plurality of mutually different levels. The devices 6 may be appropriate devices as described above. Examples of the devices 6 may include, but are not limited to, for example, an air conditioning apparatus for which the airflow amount and the temperature can be set at a plurality of levels, an audio apparatus for which the sound volume can be set at a plurality of levels, an automatic travel apparatus for which the speed can be set at a plurality of levels so as to travel the local device at the set speed, and a power window apparatus for which the opening degree (and/or close degree) can be set at a plurality of levels, and/or the like. The first and second devices 6-1 and 6-2 may be connected to the control processing unit 3.

The display unit 1 may be an apparatus that is connected to the control processing unit 3 and may perform display according to control by the control processing unit 3. The display unit 1 may be, for example, a liquid crystal display (LCD), an organic EL display, or the like.

The input position detection unit 2 may be an apparatus that is connected to the control processing unit 3 and detects the position (e.g., second position), on the operation surface, in which an input operation has been performed by the user such as an occupant(e.g., a driver or a passenger of the vehicle). The input position detection unit 2 may be, for example, a position input apparatus that detects a contact position and inputs the detected position using a resistance film method or a capacitance method. The input position detection unit 2 may output the detected second position to the control processing unit 3. The second position on the operation surface may be associated with the position (e.g., first position) on the display surface of the display unit 1 in advance. For example, in plan view of Fig. 1B, a dot 21-11 at the upper left corner of an operation surface SP may be associated with a pixel 11-11 at the upper left corner of a display surface DP. Based on the correspondence, a plurality of dots 21-mn on the operation surface SP may be associated with a plurality of pixels 11-kl on the display surface DP, respectively (k, 1, m, and n are positive integers). It should be noted here that the dot 21-11 at the upper left corner of the operation surface SP and the pixel 11-11 at the upper left corner of the display surface DP are illustrated in Fig. 1B and the other dots 21 and the other pixels 11 are omitted. In addition, the first space resolution of the plurality of pixels 11 on the display surface DP and the second space resolution of the plurality of dots 21 on the operation surface SP may be identical to each other (in other words, the first area equals the second area) or may be different from each other (in other words, the first area does not equal the second area). When the first space resolution and the second space resolution are different from each other, the first positions may correspond to the second positions on a many-to-one basis or a one-to-many basis.

When the first positions (e.g., the first positions of the plurality of pixels 11 in the example described above) on the display surface of the display unit 1 may be associated with the second positions (e.g., the second positions of the plurality of dots 21 in the example described above) on the operation surface of the input position detection unit 2, respectively, the display unit 1 and the input position detection unit 2 may be disposed in different positions in the vehicle interior. In the exemplary embodiment, however, the operation surface is disposed on the display surface and the input position detection unit 2 is integrated with the display unit 1 to form a so-called touch panel (e.g., touch screen). A touch panel TP including the display unit 1 and the input position detection unit 2 may be a member that extends toward a dashboard from a center console that separates a driver seat from a passenger seat in a vehicle interior as illustrated in, for example, Fig. 2. Further, the operation surface SP and the display surface DP may be disposed to face outside on the inclined surface of the member inclined in side view. It should be noted here that the operation surface SP of the input position detection unit 2 is illustrated separately from the display surface DP of the display unit 1 for convenience of description of the correspondence between the first positions and the second positions in Fig. 1B.

In addition, in the exemplary embodiment, the input operation may have different operation aspects depending on whether the local vehicle is stopped. More specifically, for example, the input operation may be a slide operation when the vehicle is stopped or a tap operation when the vehicle is not stopped.

Returning to Fig. 1A, the vehicle speed measurement unit 5 may be an apparatus that is connected to the control processing unit 3 and that measures the speed of the local vehicle according to control by the control processing unit 3. The vehicle speed measurement unit 5 may be, for example, a wheel speed sensor that has a rotary encoder and peripheral circuits thereof and measures the wheel speed (e.g., the rotational speed of the wheel) based on the amount of change in rotation of the wheel (e.g., wheel shaft) per unit time. The vehicle speed measurement unit 5 may output the measured wheel speed to the control processing unit 3. It should be noted here that the vehicle speed can be obtained from the wheel speed based on the size of the wheel.

The storage unit 4 may be a circuit that is connected to the control processing unit 3 and may store various types of predetermined programs and various types of predetermined data according to control by the control processing unit 3. The various types of predetermined programs may include control processing programs such as, for example, a control program that controls the units 1, 2, 4, and/or 5 of the vehicle operation input apparatus D according to the functions of these units, a display control program that controls the display unit 1, an input content obtaining program that obtains, as input content, display content indicated in the first position on the display surface corresponding to the second position on the operation surface detected by the input position detection unit 2, a stop determination program that determines whether the local vehicle is stopped based on the vehicle speed measured by the vehicle speed measurement unit 5, and/or a device processing program that processes the device 6 that is the setting target at the level obtained by the input content obtaining program. The various types of predetermined data may include necessary data for executing individual programs, such as screen information that represents a screen to be displayed in the display unit 1 and correspondence information that represents the correspondence between the first positions on the display surface of the display unit 1 and the second positions on the operation surface of the input position detection unit 2. The storage unit 4 may include, for example, a ROM (Read Only Memory), which is a non-volatile storage device, an EEPROM (Electrically Erasable Programmable Read Only Memory), which is a rewritable non-volatile storage device, and/or the like. In addition, the storage unit 4 may include a RAM (Random Access Memory) used for a so-called working memory for the control processing unit 3 in which data and the like generated during execution of the predetermined programs are stored.

The control processing unit 3 may be a circuit that controls the units 1, 2, 4, and/or 5 of the vehicle operation input apparatus D according to the functions of these units and receives an input of the input content for the predetermined device 6 installed in the vehicle. The control processing unit 3 may include, for example, a CPU (Central Processing Unit) and peripheral circuits thereof. The control processing unit 3 may be functionally configured by a control unit 31, a display control unit 32, an input content obtaining unit 33, a stop determination unit 34, and/or a device processing unit 35 by executing the control processing programs.

The control unit 31 may entirely control the vehicle operation input apparatus D by controlling the units 1, 2, 4, and/or 5 of the vehicle operation input apparatus D according to the functions of these units.

The input content obtaining unit 33 may obtain, as input content, the display content displayed in the first position on the display surface corresponding to the second position on the operation surface detected by the input position detection unit 2. In addition, in the embodiment, the input content obtaining unit 33 may determine the change amount of the levels based on the number of second positions detected by the input position detection unit 2 in the level setting display when an input operation is performed on the level setting display representing the setting of levels displayed in the display unit 1. Further, the input content obtaining unit 33 may obtain, as the input content, the setting of the levels to be changed by the determined change amount. For example, in the exemplary embodiment, the input content obtaining unit 33 may determine the change amount of the levels to be:
a predetermined value (in other words, a value specified beforehand, for example, a unit change amount or a basic value) (e.g., (the variation amount of the levels) = (the unit change amount)) when the number of second positions is 1;
twice the unit change amount (e.g., (the variation amount of the levels) = 2 × (the unit change amount)) when the number of second positions is 2; and
a predetermined border value (e.g., an upper limit value in the case of increase in the levels or a lower limit value in the case of reduction in the levels) in the settable range of the levels (e.g., (the variation amount of the levels) = (border value (the upper limit value or lower limit value)) when the number of second positions is 3. The input content obtaining unit 33 may notify the display control unit 32 and the device processing unit 35 of the obtained input content. It should be noted here that the input content obtaining unit 33 may determine the variation amount of the levels in proportion to the number of second positions (e.g., (the variation amount of the levels) = (the number of second positions) × (the unit change amount)). Alternatively, the input content obtaining unit 33 may determine the variation amount of the levels to be:
a predetermined unit change amount (e.g., (the variation amount of the levels) = (the unit change amount)) when the number of second positions is 1;
twice the predetermined unit change amount (e.g., (the variation amount of the levels) = 2 × (the unit change amount)) when the number of second positions is 2; and
four times the predetermined unit change amount (e.g., (the variation amount of the levels) = 4 × (the unit change amount)) when the number of second positions is 3.

The stop determination unit 34 may determine whether the local vehicle is stopped based on the vehicle speed measured by the vehicle speed measurement unit 5. More specifically, when the wheel speed measured by the vehicle speed measurement unit 5 is 0, the stop determination unit 34 may determine that the vehicle is stopped. In contrast, when the wheel speed measured by the vehicle speed measurement unit 5 is nonzero, the stop determination unit 34 may determine that the vehicle is not stopped, in other words, the vehicle is traveling. The stop determination unit 34 may notify the display control unit 32 of the determination result (e.g., the vehicle is stopped or not stopped (in other words, the vehicle is traveling)).

The device processing unit 35 may process the device 6 that is the setting target at the level obtained by the input content obtaining unit 33. For example, when the device 6 itself has a control function, the device processing unit 35 may output, as the control object, the level obtained by the input content obtaining unit 33 to the device 6 to operate the device 6 that is the setting target at the level obtained by the input content obtaining unit 33. Alternatively, for example, when the device 6 does not have a control function, the device processing unit 35 may control the device 6 that is the setting target so as to operate the device 6 at the level obtained by the input content obtaining unit 33.

The display control unit 32 may control the display unit 1. More specifically, in the exemplary embodiment, the display control unit 32 may display the level setting display representing the setting of the levels in the first position on the display surface of the display unit 1 in mutually different display aspects depending on whether the stop determination unit 34 has determined that the vehicle is stopped. The level setting display may include a plurality of A-pictorial figures corresponding to the plurality of levels when the stop determination unit 34 has determined that the vehicle is stopped. The level setting display may include a B-pictorial figure representing increase in the levels and a C-pictorial figure representing reduction in the levels when the stop determination unit 34 has determined that the vehicle is not stopped.

A more specific description of an example will be given below when the device 6-1 is an air conditioning apparatus 6-1 and the levels are the values of the temperature in the case in which the setting target is the temperature.

In one example, the storage unit 4 may store information representing an input screen 200a in Fig. 3 in the case of a stop as an example of the screen information. Further, when the stop determination unit 34 has determined that the vehicle is stopped, the display control unit 32 may display the input screen 200a in the case of the stop in the display unit 1 with reference to the screen information in the storage unit 4. The input screen 200a may be displayed in the display unit 1 when the stop determination unit 34 has determined that the vehicle is stopped. Further, the input screen 200a may be used to input the type of a blowout port, the value of the temperature, and/or the value of the airflow amount to the air conditioning apparatus 6-1 when the blowout port, the temperature, and/or the airflow amount are the setting targets. The input screen 200a may include, for example, blowout port setting display 201, airflow amount setting display 202, first driver seat side set temperature display (also referred to as "first D-set temperature display") 211R, driver seat side temperature setting display (also referred to as "D-temperature setting display") 212R, first passenger seat side set temperature display (also referred to as "first A-set temperature display") 211L, and passenger seat side temperature setting display (also referred to as "A-temperature setting display") 212L.

The blowout port setting display 201 may be used to set the types of blowout ports from which conditioned air having a conditioned temperature and a conditioned airflow amount is blown out. The types of blowout ports may include, but are not limited to, for example, a first blowout port for blowing air toward the feet, a second blowout port for blowing air toward the upper body, a third blowout port for defroster for blowing air toward the window, and/or the like. One or more types of the blowout ports may be selected by an input operation on the blowout port setting display 201. The blowout port setting display 201 may be indicated substantially at the center of the display surface of the display unit 1.

The airflow amount setting display 202 may be used to set the level of the airflow amount. The airflow amount may be set by an input operation on the airflow amount setting display 202. The airflow amount setting display 202 may be indicated above the blowout port setting display 201 in the upper part on the display surface of the display unit 1.

The first D-set temperature display 211R may indicate the currently set temperature on the driver seat side as the display content (e.g., value). Particularly in the specific example illustrated in Fig. 3, the currently set temperature is "26.5°C". The first D-set temperature display 211R may be indicated in the upper part (more specifically, substantially at the corner) of the other side part on the display surface of the display unit 1.

The D-temperature setting display 212R may represent the value of a temperature set on the driver seat side as the display content (e.g., setting content). The D-temperature setting display 212R may include a plurality of A-pictorial figures corresponding to settable temperature values. Since an input operation during a stop may be a slide operation as described above, a number of the A-pictorial figures that depend on a settable temperature range and a predetermined setting interval may be arranged in parallel with each other along one direction so as to make a slide operation easy. The A-pictorial figures may be rectangles having longer sides along a cross direction intersecting (for example, orthogonally intersecting) with the one direction. Particularly in the specific example illustrated in Fig. 3, the temperature of the air conditioning apparatus 6-1 can be set to a value, for example, from 30.0°C (e.g., High) to 20.0°C (e.g., Low) at intervals of 0.5°C. Accordingly, the D-temperature setting display 212R may include 21 (e.g., 1st to 21st) rectangles 2121R-1 to 2121R-21 that are arranged in parallel with each other along the up-down direction and have longer sides along the left-right direction orthogonal to the up-down direction. The 1st to 21st rectangles 2121R-1 to 2121R-21 may correspond to the values of the temperatures from 30.0°C to 20.0°C at intervals of 0.5°C, respectively. The D-temperature setting display 212R may be indicated below the first D-set temperature display 211R on the other side (e.g., driver seat side) of the blowout port setting display 201 in the other side part on the display surface of the display unit 1.

In addition, in the exemplary embodiment, the D-temperature setting display 212R may also function as the set temperature display representing the currently set temperature. For example, the A-pictorial figure corresponding to the value of the currently set temperature of the plurality of A-pictorial figures may be indicated in a first display aspect in the display unit 1. Further, for example, the A-pictorial figures not corresponding to the currently set level of the plurality of A-pictorial figures may be indicated in a second display aspect that differs from the first display aspect in the display unit 1. Particularly in the specific example illustrated in Fig. 3, the set temperature is 26.5°C as described above, the 8th rectangle 2121R-8 is displayed accordingly in a first intensity (e.g., black in Fig. 3) as the first display aspect and the remaining 1st to 7th rectangles 2121R-1 to 2121R-7 and 9th to 21st rectangles 2121R-9 to 2121R-21 are displayed in a second intensity (e.g., white in Fig. 3) as the second display aspect that differs from the first intensity.

Since the first A-set temperature display 211L and the A-temperature setting display 212L may be the same as the first D-set temperature display 211R and the D-temperature setting display 212R except that the driver seat side and the other side (for the first D-set temperature display 211R and the D-temperature setting display 212R) may respectively correspond to the passenger seat side and one side (for the first A-set temperature display 211L and the A-temperature setting display 212L), descriptions thereof are omitted.

The storage unit 4 may store information representing an input screen 200b in Fig. 4 in the case of traveling as an example of the screen information. Further, when the stop determination unit 34 has determined that the vehicle is not stopped (in other words, the vehicle is traveling), the display control unit 32 may display the input screen 200b in the case of the traveling in the display unit 1 with reference to the screen information in the storage unit 4. The input screen 200b may be displayed in the display unit 1 when the stop determination unit 34 has determined that the vehicle is not stopped. Further in this case, this screen may be used to input the types of the blowout ports, the value of the temperature, and/or the value of the airflow amount for the air conditioning apparatus 6-1 when the blowout port, the temperature, and/or the airflow amount are setting targets. The input screen 200b may include, for example, the blowout port setting display 201, the airflow amount setting display 202, the first D-set temperature display 211R, driver seat side temperature rise setting display (also referred to as "D-temperature rise setting display") 222R, driver seat side temperature drop setting display (also referred to as "D-temperature drop setting display") 223R, second driver seat side set temperature display (also referred to as "second D-set temperature display") 224R, the first A-set temperature display 211L, passenger seat side temperature rise setting display (also referred to as "A-temperature rise setting display") 222L, passenger seat side temperature drop setting display (also referred to as "A-temperature drop setting display") 223L, and/or second passenger seat side set temperature display (also referred to as "second A-set temperature display") 224L.

Since the blowout port setting display 201, the airflow amount setting display 202, the first D-set temperature display 211R, and the first A-set temperature display 211L on the input screen 200b in the case of traveling may be the same as the blowout port setting display 201, the airflow amount setting display 202, the first D-set temperature display 211R, and the first A-set temperature display 211L on the input screen 200a in the case of a stop, descriptions thereof are omitted.

The driver seat side temperature rise setting display (also referred to as "D-temperature rise setting display") 222R may represent increase in temperature as the display content (e.g., setting content) on the driver seat side. More specifically, the D-temperature rise setting display 222R may be a B-pictorial figure representing increase in temperature. Since an input operation during traveling may be a tap operation as described above, the shape of the B-pictorial figure may be, for example, a rectangle to make a tap operation easy. Since the change amount of the levels may be determined based on the number of second positions in the exemplary embodiment, a rectangle as one example of the B-pictorial figure may have a size that can be tapped with a plurality of fingers (for example, three fingers) . In addition, the rectangle may contain the first pictorial symbol including two partially overlapping up-arrows that symbolically represent increase (e.g., rise) in temperature. Particularly in the specific example illustrated in Fig. 4, the temperature is increased from the currently set temperature to the maximum temperature (e.g., the upper limit value in the settable range, in other words, the highest temperature) by the change amount determined based on the number of second positions detected by the input position detection unit 2. The unit change amount may be set to an appropriate value and is, for example, 0.5°C or the like. The D-temperature rise setting display 222R may be indicated in the upper half of the other side on the display surface of the display unit 1 on the other side (e.g., driver seat side) of the blowout port setting display 201.

The driver seat side temperature drop setting display (also referred to as "D-temperature drop setting display") 223R represents reduction in temperature as the display content (e.g., setting content) on the driver seat side. More specifically, the D-temperature drop setting display 223R may be, for example, a rectangle with a size that can be tapped with a plurality of fingers (for example, three fingers), and the rectangle may include a C-pictorial figure (in other words, the second pictorial symbol including two partially overlapping down-arrows) symbolically representing reduction (e.g., drop) in temperature. Particularly in this specific example illustrated in Fig. 4, the temperature may be reduced from the currently set temperature to the minimum temperature (e.g., the lower limit value in the settable range, in other words, the lowest temperature) by the change amount determined based on the number of second positions detected by the input position detection unit 2. The D-temperature drop setting display 223R may be indicated in the lower half of the other side part on the display surface of the display unit 1 on the other side (e.g., driver seat side) of the blowout port setting display 201.

The second driver seat side set temperature display (also referred to as "second D-set temperature display") 224R may indicate the currently set temperature on the driver seat side as the display content (e.g., setting content) using a pictorial symbol. Particularly in the specific example illustrated in Fig. 4, the second set temperature display 224R may have a line segment 224R representing the settable temperature range on the driver seat side. Further in this specific example, in the line segment 224R, a position DTR corresponding to the currently set temperature in the settable temperature range may be displayed in a third display aspect (for example, a third intensity (e.g., black in Fig. 4)). Further in this specific example, the positions not corresponding to the currently set temperature (e.g., positions in the line segment 224R except the position DTR) may be displayed in a fourth display aspect that differs from the third display aspect (for example, a fourth intensity (e.g., white in Fig. 4) that differs from the third intensity) . The line segment 224R may extend vertically between the first pictorial symbol of the D-temperature rise setting display 222R and the second pictorial symbol of the D-temperature drop setting display 223R so as to overlap with the D-temperature rise setting display 222R and the D-temperature drop setting display 223R.

Since the A-temperature rise setting display 222L, the A-temperature drop setting display 223L, and the second A-set temperature display 224L may be the same as the D-temperature rise setting display 222R, the D-temperature drop setting display 223R, and the second D-set temperature display 224R except that the driver seat side and the other side (for the D-temperature rise setting display 222R, the D-temperature drop setting display 223R, and the second D-set temperature display 224R) may respectively correspond to the passenger seat side and one side (for the A-temperature rise setting display 222L, the A-temperature drop setting display 223L, and the second A-set temperature display 224L), descriptions thereof are omitted.

It should be noted here that the vehicle speed measurement unit 5 and the stop determination unit 34 may be considered as examples of the stop detection unit that detects whether the vehicle is stopped. The D-temperature setting display 212R, the A-temperature setting display 212L, the D-temperature rise setting display 222R, the D-temperature drop setting display 223R, the A-temperature rise setting display 222L, and the A-temperature drop setting display 223L may be considered as examples of the level setting display representing the setting of the levels. The A-pictorial figures may be considered as equivalent to an example of the plurality of third pictorial figures corresponding to the plurality of levels. The B-pictorial figure may be considered as equivalent to an example of the first pictorial figure representing increase in the levels. Further, the C-pictorial figure may be considered as equivalent to an example of the second pictorial figure representing reduction in the levels.

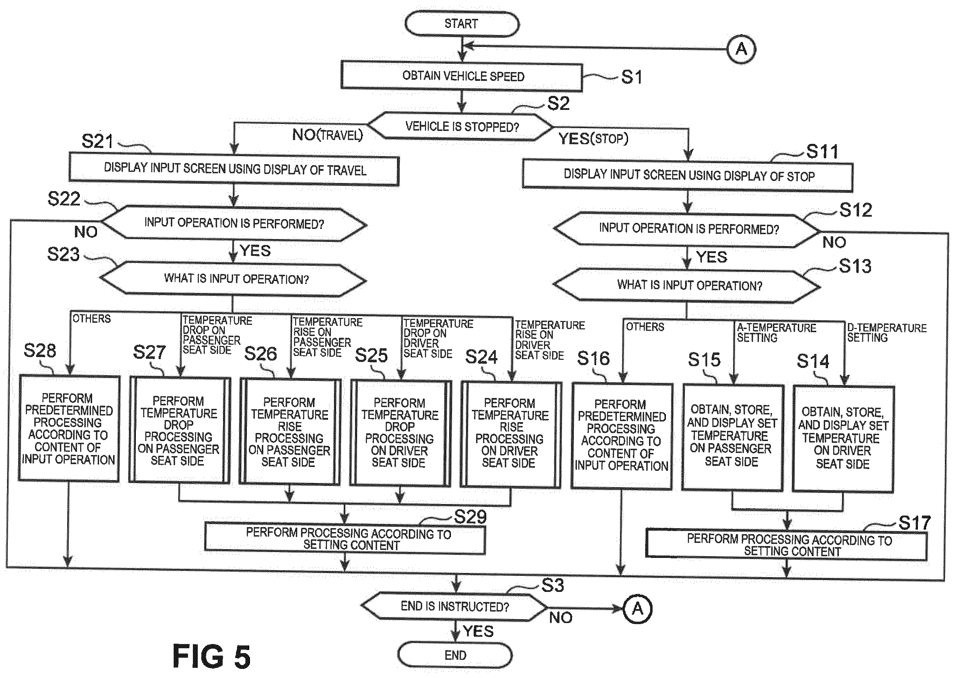

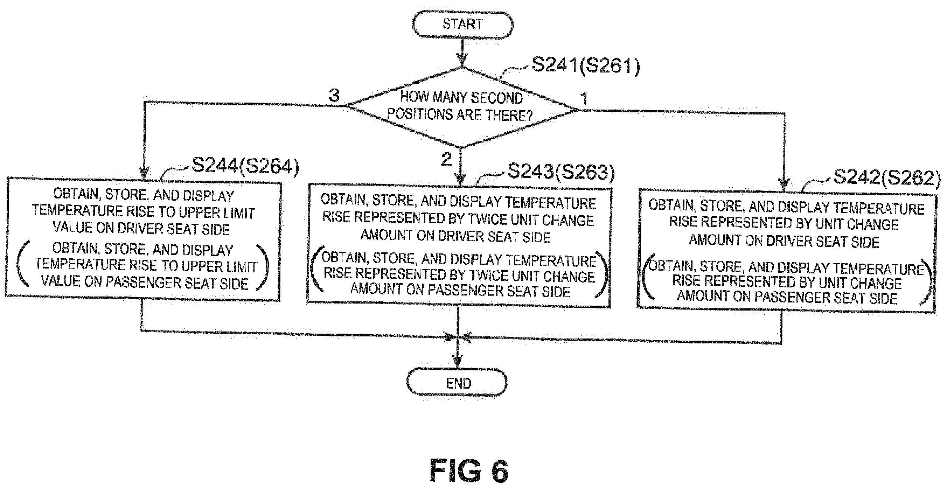

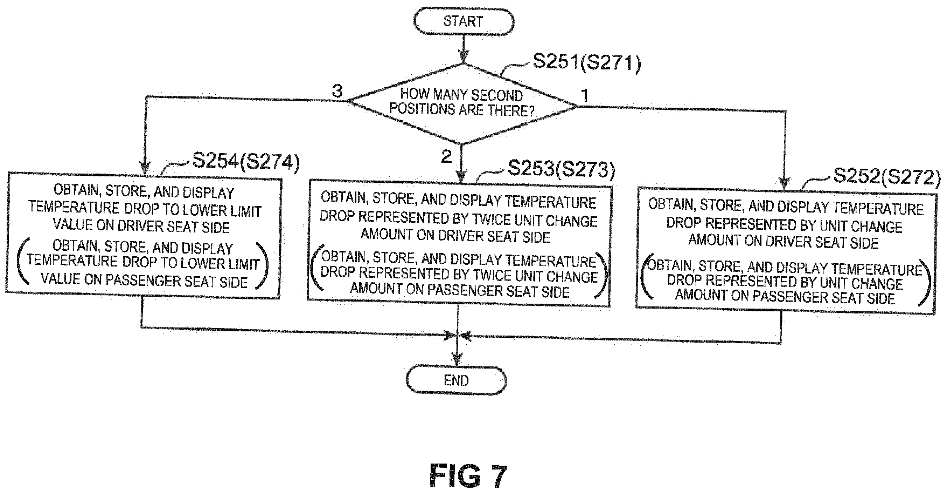

Next, exemplary operation of the exemplary embodiment will be described. Fig. 5 is a flowchart illustrating exemplary operation of the vehicle operation input apparatus illustrated in Fig. 1. Fig. 6 is a flowchart illustrating exemplary temperature rise processing on the driver seat side (and exemplary temperature rise processing on the passenger seat side) indicated in Fig. 5. Since the temperature rise processing on the passenger seat side illustrated in Fig. 5 may be the same as the temperature rise processing on the driver seat side illustrated in Fig. 5 except that the driver seat side may correspond to the passenger seat side, the temperature rise processing on the passenger seat side illustrated in Fig. 5 is indicated between parentheses in Fig. 6. Fig. 7 is a flowchart illustrating exemplary temperature drop processing on the driver seat side (and exemplary temperature drop processing on the passenger seat side) indicated in Fig. 5. Since the temperature drop processing on the passenger seat side illustrated in Fig. 5 is the same as the temperature drop processing on the driver seat side illustrated in Fig. 5 except that the driver seat side may correspond to the passenger seat side, the temperature drop processing on the passenger seat side illustrated in Fig. 5 is illustrated between parentheses in Fig. 7.

When the vehicle starts operating, the vehicle operation input apparatus D described above may initialize the necessary units and may start these units. In the control processing unit 3, the control unit 31, the display control unit 32, the input content obtaining unit 33, the stop determination unit 34, and the device processing unit 35 may be functionally configured by executing the control processing programs thereof. Then, the vehicle operation input apparatus D may cause the display control unit 32 of the control processing unit 3 to display, for example, the input screen 200a in the case of a stop in Fig. 3 in the display unit 1 with reference to the screen information in the storage unit 4.

Then, in Fig. 5, the vehicle operation input apparatus D may cause the control processing unit 3 to obtain the vehicle speed (e.g., wheel speed in the embodiment) of the local vehicle from the vehicle speed measurement unit 5 (S1).

Next, the vehicle operation input apparatus D may cause the stop determination unit 34 of the control processing unit 3 to determine whether the local vehicle is stopped based on the vehicle speed measured by the vehicle speed measurement unit 5 (S2). When the vehicle is determined to be stopped as a result of this determination (Yes (stop)), the vehicle operation input apparatus D may cause the control processing unit 3 to execute a process S11. In contrast, when the vehicle is not determined to be stopped as a result of the determination (No (traveling)), the vehicle operation input apparatus D may cause the control processing unit 3 to execute a process S21.

In the process S11, the vehicle operation input apparatus D may cause the display control unit 32 of the control processing unit 3 to display, for example, the input screen 200a in the case of a stop in Fig. 3 in the display unit 1 and then execute a process S12.

In the process S12, the vehicle operation input apparatus D may cause the control processing unit 3 to determine whether an input operation has been performed. As a result of this determination, when an input operation has been performed (Yes), the control processing unit 3 may execute a process S13. In contrast, when an input operation has not been performed (No), the control processing unit 3 may execute a process S3.

In the process S13, the vehicle operation input apparatus D may cause the input content obtaining unit 33 of the control processing unit 3 to determine the content of the input operation. More specifically, the input content obtaining unit 33 may determine the display content displayed in the first position on the display surface corresponding to the second position on the operation surface detected by the input position detection unit 2. More specifically, when an input operation is performed via a sliding operation by, for example, a finger of the user in the second position on the operation surface corresponding to the first position on the display surface indicating the D-temperature setting display 212R, the input content obtaining unit 33 may determine an input operation on the D-temperature setting display 212R. In such a case (e.g., D-temperature setting), the vehicle operation input apparatus D may cause the control processing unit 3 to execute a process S14 and then execute a process S17. Similarly, when an input operation is performed on the A-temperature setting display 212L, the vehicle operation input apparatus D may determine an input operation on the A-temperature setting display 212L. In such a case (e.g., A-temperature setting), the vehicle operation input apparatus D may execute a process S15 and then execute the process S17. In case the vehicle operation input apparatus D determines an input operation on display (for example, an input operation on the blowout port setting display 201, an input operation on the airflow amount setting display 202, etc.) other than the D-temperature setting display 212R and the A-temperature setting display 212L (e.g., others), the vehicle operation input apparatus D may cause the control processing unit 3 to execute a process S16 for executing appropriate predetermined processing (e.g., processing specified before executing step S16) that depends on the content of the input operation and then execute the process S3.

In the process S14, the vehicle operation input apparatus D may cause the input content obtaining unit 33 to obtain, as the input content, the value of the temperature displayed in the rectangle 2121R in which an input operation has been performed among the 1st to 21st rectangles 2121R-1 to 2121R-21 in the D-temperature setting display 212R on the driver seat side and store the obtained value in the storage unit 4. Then, to display a new currently set temperature, the vehicle operation input apparatus D may cause the display control unit 32 of the control processing unit 3 to display the rectangle 2121R in which an input operation has been performed in the first intensity as the first display aspect and display the remaining rectangles 2121R excluding the rectangle 2121R in which an input operation has been performed in the second intensity as the second display aspect.

Although the vehicle operation input apparatus D may perform the steps described above on the driver seat side in the process S14 described above, the vehicle operation input apparatus D may perform steps similar to those in the process S14 described above on the passenger seat side, in the process S15.

In the process S17 that follows the process S14 or the process S15, the vehicle operation input apparatus D may cause the device processing unit 35 of the control processing unit 3 to process the air conditioning apparatus 6-1 according to the setting content stored in the storage unit 4. For example, in the process S17 that follows the process S15, the device processing unit 35 may cause the air conditioning apparatus 6-1 to blow the conditioned air at the new currently set temperature on the passenger seat side.

In contrast, in the process S21, the vehicle operation input apparatus D may cause the display control unit 32 of the control processing unit 3 to display the input screen 200b in Fig. 4 when the vehicle is not stopped (in other words, the vehicle is traveling) in the display unit 1 and then execute a process S22.

In this process S22, the vehicle operation input apparatus D may cause the control processing unit 3 to determine whether an input operation has been performed. When an input operation has been performed (Yes) as a result of this determination, the control processing unit 3 may execute a process S23. In contrast, when an input operation has not been performed (No) as a result of this determination, the control processing unit 3 may execute the process S3.

In this process S23, the vehicle operation input apparatus D may cause the input content obtaining unit 33 of the control processing unit 3 to determine the content of the input operation. More specifically, the input content obtaining unit 33 may determine the display content displayed in the first position on the display surface corresponding to the second position on the operation surface detected by the input position detection unit 2. More specifically, when an input operation is performed via, for example, a tap operation by a finger of the user in the second position on the operation surface corresponding to the first position on the display surface on which the D-temperature rise setting display 222R is indicated, the input content obtaining unit 33 may determine that an input operation on the D-temperature rise setting display 222R. In such a case (e.g., driver seat side temperature rise), the vehicle operation input apparatus D may cause the control processing unit 3 to execute a temperature rise process S24 on the driver seat side and then execute a process S29. Similarly, when an input operation is performed on the D-temperature drop setting display 223R, the vehicle operation input apparatus D may determine an input operation on the D-temperature drop setting display 223R. In such a case (e.g., driver seat side temperature drop), the vehicle operation input apparatus D may execute a temperature drop process S25 on the driver seat side and then executes the process S29. When an input operation is performed on the A-temperature rise setting display 222L, the vehicle operation input apparatus D may determine an input operation on the A-temperature rise setting display 222L. In such a case (e.g., passenger seat side temperature rise), the vehicle operation input apparatus D may execute a temperature rise process S26 on the passenger seat side and then execute the process S29. When an input operation is performed on the A-temperature drop setting display 223L, the vehicle operation input apparatus D may determine an input operation on the A-temperature drop setting display 223L. In such a case (e.g., passenger seat side temperature drop), the vehicle operation input apparatus D may execute a temperature drop process S27 on the passenger seat side and then executes the process S29. When the vehicle operation input apparatus D determines an input operation on display (for example, an input operation on the blowout port setting display 201, an input operation on the airflow amount setting display 202, etc.) other than the D-temperature rise setting display 222R, the D-temperature drop setting display 223R, the A-temperature rise setting display 222L, and the A-temperature drop setting display 223L (e.g., Others), the vehicle operation input apparatus D may cause the control processing unit 3 to execute a process S28 for executing predetermined appropriate processing (e.g., processing specified before executing step S28) according to the content of the input operation and then execute the process S3.

In the temperature rise process S24 on the driver seat side, as illustrated in Fig. 6, the vehicle operation input apparatus D may first cause the input content obtaining unit 33 to determine the number of second positions on the D-temperature rise setting display 222R on which an input operation has been performed (S241). When the occupant performs a tap operation with one finger on the D-temperature rise setting display 222R, the input content obtaining unit 33 may determine the number of second positions to be 1 (one) as a result of this determination, may execute a process S242, and may end this process S24. When the occupant performs a tap operation with two fingers on the D-temperature rise setting display 222R, the input content obtaining unit 33 may determine the number of second positions to be 2 (two) as a result of the determination, may execute a process S243, and may end this process S24. When the occupant performs a tap operation with three fingers on the D-temperature rise setting display 222R, the input content obtaining unit 33 may determine the number of second positions to be 3 (three) as a result of the determination, may execute a process S244, and may end this process S24.

In this process S242, the input content obtaining unit 33 may obtain, as the input content, an increase in temperature on the driver seat side, indicated on the D-temperature rise setting display 222R on which an input operation has been performed, the increase in temperature being represented by the unit change amount (such as, for example, 0.5°C). Further, the input content obtaining unit 33 may store the obtained input content in the storage unit 4. More specifically, in the exemplary embodiment, the input content obtaining unit 33 may obtain a new currently set temperature by adding the unit change amount to the currently set temperature until the maximum temperature (e.g., upper limit value) is reached on the driver seat side (e.g., (currently set temperature) ← (currently set temperature) + (unit change amount) where (currently set temperature) ≤ (maximum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature.

In the process S243, the input content obtaining unit 33 may obtain, as the input content, an increase in temperature on the driver seat side indicated on the D-temperature rise setting display 222R on which an input operation has been performed, the increase in temperature being represented by twice the unit change amount (for instance, 2 × 0.5°C in the specific example above). Further, the input content obtaining unit 33 may store the obtained input content in the storage unit 4. More specifically, in the embodiment, the input content obtaining unit 33 may obtain a new currently set temperature by adding twice the unit change amount to the currently set temperature until the maximum temperature (e.g., upper limit value) is reached on the driver seat side (e.g., (currently set temperature) ← (currently set temperature) + 2 × (unit change amount) where (currently set temperature) ≤ (maximum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature.

In the process S244, the input content obtaining unit 33 may obtain, as the input content, an increase in temperature on the driver seat side indicated on the D-temperature rise setting display 222R (on which an input operation has been performed) until the maximum temperature (e.g., upper limit value) is reached and may store the obtained input content in the storage unit 4. More specifically, in the exemplary embodiment, the input content obtaining unit 33 may set a new currently set temperature to the maximum temperature (e.g., upper limit value) on the driver seat side (e.g., (currently set temperature) ← (maximum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature (in other words, the maximum temperature).

In the temperature drop processing S25 on the driver seat side, as illustrated in Fig. 7, the vehicle operation input apparatus D may first cause the input content obtaining unit 33 to determine the number of second positions on the D-temperature drop setting display 223R on which an input operation has been performed (S251). When the occupant performs a tap operation with one finger on the D-temperature drop setting display 223R, the input content obtaining unit 33 may determine the number of second positions to be 1 (one) as a result of this determination, execute a process S252, and end this process S25. When the occupant performs a tap operation with two fingers on the D-temperature drop setting display 223R, the input content obtaining unit 33 may determine the number of second positions to be 2 (two) as a result of the determination, execute a process S253, and end this process S25. When the occupant performs a tap operation with three fingers on the D-temperature drop setting display 223R, the input content obtaining unit 33 may determine the number of second positions to be 3 (three) as a result of the determination, execute a process S254, and end this process S25.

In this process S252, the input content obtaining unit 33 may obtain, as the input content, a reduction in temperature on the driver seat side, indicated on the D-temperature drop setting display 223R on which an input operation has been performed, the reduction in temperature being represented by the unit change amount (such as, for example, 0.5°C). Further, the input content obtaining unit 33 may store the obtained input content in the storage unit 4. More specifically, in the exemplary embodiment, the input content obtaining unit 33 may obtain a new currently set temperature by subtracting the unit change amount from the currently set temperature until the minimum temperature (e.g., lower limit value) is reached on the driver seat side (e.g., (currently set temperature) ← (currently set temperature) - (unit change amount) where (currently set temperature) ≥ (minimum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature.

In the process S253, the input content obtaining unit 33 may obtain, as the input content, a reduction in temperature on the driver seat side, indicated in the D-temperature drop setting display 223R on which an input operation has been performed, the reduction in temperature being represented by twice the unit change amount (e.g., 2 × 0.5°C in the specific example above). Further, the input content obtaining unit 33 may store the obtained input content in the storage unit 4. More specifically, in the exemplary embodiment, the input content obtaining unit 33 may obtain a new currently set temperature by subtracting twice the unit change amount from the currently set temperature until the minimum temperature (e.g., lower limit value) is reached on the driver seat side (e.g., (currently set temperature) ← (currently set temperature) - 2 × (unit change amount) where (currently set temperature) ≥ (minimum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature.

In the process S254, the input content obtaining unit 33 may obtain, as the input content, a reduction in temperature on the driver seat side indicated on the D-temperature drop setting display 223R (on which an input operation has been performed) until the minimum temperature (e.g., lower limit value) is reached. Further, the input content obtaining unit 33 may store the obtained input content in the storage unit 4. More specifically, in the exemplary embodiment, the input content obtaining unit 33 may set a new currently set temperature to the minimum temperature (e.g., lower limit value) on the driver seat side (e.g., (currently set temperature) ← (minimum temperature)). Then, to display the new currently set temperature, the vehicle operation input apparatus D may cause the display control unit 32 of the control processing unit 3 to display the first D-set temperature display 211R and the second D-set temperature display 224R using the new currently set temperature (in other words, the minimum temperature).

The vehicle operation input apparatus D may perform the steps on the driver seat side as described above in the process S24 and the process S25. In the temperature rise processing S26 on the passenger seat side and the temperature drop processing S27 on the passenger seat side, as illustrated between parentheses in Figs. 6 and 7, the vehicle operation input apparatus D may perform steps similar to those in the process S24 and the process S25 on the passenger seat side.

In the process S29 that follows any one of the process S24 to the process S27, the vehicle operation input apparatus D may cause the device processing unit 35 of the control processing unit 3 to process the air conditioning apparatus 6-1 according to the setting content stored in the storage unit 4, as in the process S17 described above. For example, in the process S29 that follows the process S24, the device processing unit 35 may cause the air conditioning apparatus 6-1 to blow air having been conditioned at the new currently set temperature on the driver seat side. In addition, for example, in the process S29 that follows the process S27, the device processing unit 35 may cause the air conditioning apparatus 6-1 to blow air having been conditioned at the new currently set temperature on the passenger seat side.

Then, in the process S3, the vehicle operation input apparatus D may determine whether the end of the operation of the vehicle is instructed based on an input operation of a switch for turning on and off the operation of the vehicle or the like. As a result of this determination, when the end of the operation is instructed (Yes), the vehicle operation input apparatus D may end this processing and end the operation. In contrast, when the end of the operation is not instructed (No) as a result of the determination, the vehicle operation input apparatus D may return the processing to the process S1.

Since the vehicle operation input apparatus may operate as described above, when, for example, the occupant performs a slide operation on the D-temperature setting display 212R during a stop, the vehicle operation input apparatus D may repeatedly perform the process S1, the process S2, the process S11, the process S12, the process S13, the process S14, the process S17, and the process S3 according to the slide operation. This may change the rectangle 2121R of the D-temperature setting display 212R displayed in the first intensity so as to follow the slide operation and change the currently set temperature as to follow the slide operation. In addition, when, for example, the occupant performs a plurality of tap operations on the D-temperature drop setting display 223R during traveling, the vehicle operation input apparatus D may repeatedly perform the process S1, the process S2, the process S21, the process S22, the process S23, the process S25, the process S29, and the process S3 a number of times equal to the number of tap operations. This may change the position DTR displayed in the third intensity every tap operation and change the currently set temperature every tap operation. When the occupant performs a tap operation with one finger, the currently set temperature may be changed by the unit change amount every tap operation. When the occupant performs a tap operation with two fingers, the currently set temperature may be changed by twice the unit change amount every tap operation. When the occupant performs a tap operation with three fingers, the currently set temperature may be changed to the maximum temperature. When the occupant repeats a tap operation with three fingers, the currently set temperature may be kept at the maximum temperature.

As described above, the vehicle operation input apparatus D according to the embodiment and/or the vehicle operation input method implemented therein can determine the change amount of the levels based on the number of second positions detected by the input position detection unit 2 in the level setting display when an input operation is performed on the level setting display (e.g., D-temperature rise setting display 222R, D-temperature drop setting display 223R, A-temperature rise setting display 222L, and A-temperature drop setting display 223L in the above description). Accordingly, since the vehicle operation input apparatus D and/or the vehicle operation input method can preset various change amounts of the levels according to the number of second positions (in other words, various change amounts of the levels can be specified beforehand), a desired setting value can be input with an easier input operation, which may lead to improved operation of the device installed in the vehicle.

The vehicle operation input apparatus D and/or the vehicle operation input method can input stepwise increase in the levels by various change amounts (e.g., many steps) and input stepwise reduction in the levels by various change amounts.

In the vehicle operation input apparatus D and/or the vehicle operation input method, when the vehicle is traveling, by indicating the level setting display including the first pictorial figures (e.g., B-pictorial figures in the above description) representing increase in the levels and the second pictorial figures (e.g., C-pictorial figures in the above description) representing reduction in the levels, an input operation can be performed with, for example, a simple tap operation and an input operation can be performed without taking special care. When the vehicle is stopped, on the other hand, in the vehicle operation input apparatus D and/or the vehicle operation input method, by indicating the level setting display including the plurality of third pictorial figures (e.g., A-pictorial figures) corresponding to the plurality of levels, an input operation can be performed by, for example, a slide operation and a desired setting value can be input more accurately by continuously changing the levels. Thus, according to the vehicle operation input apparatus D and/or the vehicle operation input method, operation of the device installed in the vehicle can be improved.

In the exemplary embodiment described above, the device 6 is an air conditioning apparatus, the setting target is temperature, and the levels are the values of the temperature. This configuration can provide the vehicle operation input apparatus D for an air conditioning apparatus, which can enable an input of a desired setting value with an easier input operation in the setting of temperature. The present disclosure, however, is not limited to the exemplary embodiment and changes can be made as appropriate.

For example, the device 6 may be an air conditioning apparatus, the setting target may be an airflow amount, and the levels may be the values of an airflow amount. This can provide the vehicle operation input apparatus D for an air conditioning apparatus, which can enable an input of a desired setting value with an easier input operation in the setting of an airflow amount.

Alternatively, for example, the device 6 may be an audio apparatus, the setting target may be a sound volume, and the levels may be the values of a sound volume. This can provide the vehicle operation input apparatus D for an audio apparatus, which can enable an input of a desired setting value with an easier input operation in the setting of a sound volume.

Alternatively, for example, the device 6 may be an automatic traveling apparatus that travels the local vehicle at a set speed, the setting target may be the set speed, and the levels may be the values of the set speed. This can provide the vehicle operation input apparatus D for an automatic traveling apparatus, which can enable an input of a desired setting value with an easier input operation in the setting of the speed.

Alternatively, for example, the device 6 may be a power window apparatus, the setting target may be an opening degree representing the degree of opening a window, and the levels may be the values of an opening degree. This can provide the vehicle operation input apparatus for a power window apparatus, which can enable an input of a desired setting value with an easier input operation in the setting of an opening degree.

In addition, the A-pictorial figures on the D-temperature setting display 212R, the A-pictorial figures on the A-temperature setting display 212L, the D-temperature rise setting display 222R, the D-temperature drop setting display 223R, the A-temperature rise setting display 222L, and the A-temperature drop setting display 223L are rectangular in the exemplary embodiment described above. The present disclosure, however, is not limited to the exemplary embodiment and they may be circular, oblong, elliptic, or polygonal as necessary.

In addition, the contours and pictorial symbols on the D-temperature rise setting display 222R, the D-temperature drop setting display 223R, the A-temperature rise setting display 222L, and the A-temperature drop setting display 223L are indicated in the exemplary embodiment described above. In all of or a part of 222R, 223R, 222L, and 223L, however, the contours do not have to be displayed and the pictorial symbols may be displayed.

In addition, the input position detection unit 2 is an apparatus that can detect an input position on the entire operation surface thereof in the exemplary embodiment described above. The input position detection unit 2, however, may be an apparatus that can detect input positions in at least the second positions on the operation surfaces corresponding to the first positions on the display surfaces for displaying the blowout port setting display 201, the airflow amount setting display 202, the D-temperature setting display 212R, the A-temperature setting display 212L, the D-temperature rise setting display 222R, the D-temperature drop setting display 223R, the A-temperature rise setting display 222L, and the A-temperature drop setting display 223L.

In addition, in the exemplary embodiment described above, switching between the input screen 200a in the case of a stop and the input screen 200b in the case of traveling may be stopped in the case of congestion. For example, in the case of congestion, even when the vehicle that is traveling is stopped, the display of the input screen 200b and the operation aspect of the input operation in the case of traveling may be maintained. For determination of congestion, the vehicle operation input apparatus D may only need to further include a position measurement unit such as, for example, a GPS (Global Positioning System) that measures the position of the local vehicle and a receiver that receives traffic information including congestion information provided by, for example, a VICS (Vehicle Information and Communication System (registered trademark)) or the like, and the control processing unit 3 may only need to determine whether the position of the local vehicle measured by the position measurement unit is included in the congestion region (e.g., congestion range) represented based on the congestion information received by the receiver. This can eliminate flicker that may occur when switching between the input screens 200a and 200b is performed during congestion and can make an input operation easier.

Although the present disclosure has been described appropriately and sufficiently above using exemplary embodiments with reference to the drawings, those skilled in the art should recognize that the exemplary embodiments described above can be changed and/or modified easily. Accordingly, as long as changes and modifications made by those skilled in the art do not depart from the scope of the claims described in the appended claims, the changes and the modifications are assumed to be included in the scope of the claims.

### Description of Reference Signs and Numerals

D: vehicle operation input apparatus
TP: touch panel
DP: display surface
SP: operation surface
1: display unit
2: input position detection unit
3: control processing unit
4: storage unit
5: vehicle speed measurement unit
6-1: first device
6-2: second device
11: pixel
21: dot
31: control unit
32: display control unit
33: input content obtaining unit
34: stop determination unit
35: device processing unit
200a, 200b: input screen
222R: driver seat side temperature rise setting display
222L: passenger seat side temperature rise setting display
223R: driver seat side temperature drop setting display
223L: passenger seat side temperature drop setting display

## Claims

1. A vehicle operation input apparatus (D) that is configured to perform an input to a device (6-1, 6-2) that is installed in a vehicle and that is configured to achieve a predetermined function at a plurality of mutually different levels, the vehicle operation input apparatus (D) comprising:
a display unit (1);
an input position detection unit (2) that has an operation surface (SP) associated with a first position on a display surface (DP) of the display unit (1) and is configured to detect a second position on the operation surface (SP), the second position being where an input operation is performed;
a display control unit (32) configured to control the display unit (1); and
an input content obtaining unit (33) configured to obtain, as input content, display content displayed in the first position that corresponds to the second position detected by the input position detection unit (2),
wherein the display control unit (32) is configured to display a level setting display (212R, 212L, 222R, 222L, 223R, 223L) representing a setting of the levels in the first position on the display surface (DP),
wherein the input content obtaining unit (33) is configured to determine a change amount of the levels based on the number of second positions detected by the input position detection unit (2) in the level setting display (212R, 212L, 222R, 222L, 223R, 223L) in an input operation on the level setting display (212R, 212L, 222R, 222L, 223R, 223L) and to obtain, as the input content, the setting of the levels to be changed by the determined change amount.

2. The vehicle operation input apparatus (D) according to claim 1,
wherein the level setting display (212R, 212L, 222R, 222L, 223R, 223L) includes a first pictorial figure that represents increase in the levels and a second pictorial figure that represents reduction in the levels.

3. The vehicle operation input apparatus according to claim 2, further comprising:
a stop detection unit (34) configured to detect whether the vehicle is stopped,
wherein the level setting display (222R, 222L, 223R, 223L) includes the first pictorial figure and the second pictorial figure when the stop detection unit (34) has detected that the vehicle is not stopped and the level setting display (212R, 212L) includes a plurality of third pictorial figures that correspond to the plurality of levels when the stop detection unit (34) has detected that the vehicle is stopped.

4. The vehicle operation input apparatus according to claim 3,
wherein the level setting display (212R, 212L) is configured to, when the stop detection unit (34) has detected that the vehicle is stopped, also function as the set level display representing a currently set level,
wherein the display control unit (32) is further configured to display, when the stop detection unit (34) has detected that the vehicle is stopped,
in a first display aspect, a third pictorial figure of the plurality of third pictorial figures that corresponds to the currently set level in the display unit (1), and
in a second display aspect that differs from the first display aspect, at least one third pictorial figure of the plurality of third pictorial figures that does not correspond to the currently set level in the display unit (1), and
the display control unit (32) is further configured to display, when the stop detection unit has detected that the vehicle is not stopped,
a line segment representing a range settable by the plurality of levels,
in a third display aspect, a position in the line segment corresponding to the currently set level in the display unit (1), and
in a fourth display aspect that differs from the third display aspect, at least one position in the line segment not corresponding to the currently set level in the display unit (1).

5. A vehicle operation input method for performing an input to a device (6-1, 6-2) that is installed in a vehicle and that is configured to achieve a predetermined function at a plurality of mutually different levels, the vehicle operation input method comprising:
a display step of displaying predetermined display content;
an input position detection step of detecting a position on a display surface (DP), the position being where an input operation is performed; and
an input content obtaining step of obtaining, as input content, display content displayed in the position detected in the input position detection step,
the display control step indicating a level setting display (212R, 212L, 222R, 222L, 223R, 223L) representing a setting of the levels,
the input content obtaining step determining a change amount of the levels based on the number of positions detected in the input position detection step in the level setting display (212R, 212L, 222R, 222L, 223R, 223L) in an input operation on the level setting display (212R, 212L, 222R, 222L, 223R, 223L) and obtaining, as the input content, the setting of the levels to be changed by the determined change amount.

6. The method according to claim 5, wherein the level setting display (212R, 212L, 222R, 222L, 223R, 223L) includes a first pictorial figure that represents increase in the levels and a second pictorial figure that represents reduction in the levels.

7. The method according to claim 6, further comprising:
a stop detection step of detecting whether the vehicle is stopped,
wherein the level setting display (222R, 222L, 223R, 223L) includes the first pictorial figure and the second pictorial figure when the vehicle has not been detected to be stopped and the level setting display (212R, 212L) includes a plurality of third pictorial figures that correspond to the plurality of levels when the vehicle has been detected to be stopped.

8. The method according to claim 7, wherein, when the vehicle has been detected to be stopped, the level setting display (212R, 212L) also functions as the set level display representing a currently set level,
wherein the method further comprises:
displaying, when the vehicle has been detected to be stopped,
in a first display aspect, a third pictorial figure of the plurality of third pictorial figures that corresponds to the currently set level, and
in a second display aspect that differs from the first display aspect, at least one third pictorial figure of the plurality of third pictorial figures that does not correspond to the currently set level, and
displaying, when the vehicle has not been detected to be stopped,
a line segment representing a range settable by the plurality of levels,
in a third display aspect, a position in the line segment corresponding to the currently set level, and
in a fourth display aspect that differs from the third display aspect, at least one position in the line segment not corresponding to the currently set level.

9. A computer program product comprising computer-readable instructions that, when loaded and run on a computer, cause the computer to perform the method according to any one of claims 5 to 8.
